# EUROPEAN PATENT APPLICATION

(11) **EP 1 335 282 A2**
(43) Date of publication of application: **13.08.2003**
(21) Application number: 03250452.4
(22) Date of filing: 24.01.2003
(51) Int. Cl.: G06F 9/445

(54) **Resetting embedded devices**

(30) Priority: 05.02.2002 KR 2002006575; 11.06.2002 KR 2002032685
(71) Applicant: SAMSUNG ELECTRONICS CO., LTD., Suwon-City, Kyungki-do (KR)
(72) Inventor: Park, Sung-sik, Suwon-city, Gyunggi-do (KR); Park, Hong-chan, Busan-city (KR); Park, Han-sub, Dongan-gu, Anyang-city, Gyunggi-do (KR)
(74) Representative: Geary, Stuart Lloyd

(57) **Abstract**

In an embedded device, a data loss warning and a reset mode selection dialog is displayed in response to a hard reset command to allow a user to confirm and/or select either cold booting or warm booting after being notified of data loss.

## Description

The present invention relates to an embedded device including a display, user input means including means for requesting a reset, a processor and a memory, the contents of the memory being erased by a hard reset of the device.

Embedded devices, such as personal digital assistants (PDAs) sometimes store data in RAM (Random Access Memory). PDAs of this type have their RAM divided into an operation area and a storage area. The operation area is occupied by an OS (operating system), application programs and temporary data input by a user. The storage area is occupied by application programs and used for backing up data input by the user.

Such embedded devices have a reset mode for resetting them in the case that the system locks up. There are two reset modes, namely soft reset and hard reset. The hard reset resets the system to an initial state by deleting all the data recorded in the RAM whereas the soft reset deletes only the data in the operation area in the RAM and preserving the data in the storage area. The hard reset and the soft reset are also called 'cold booting' and 'warm booting,' respectively.

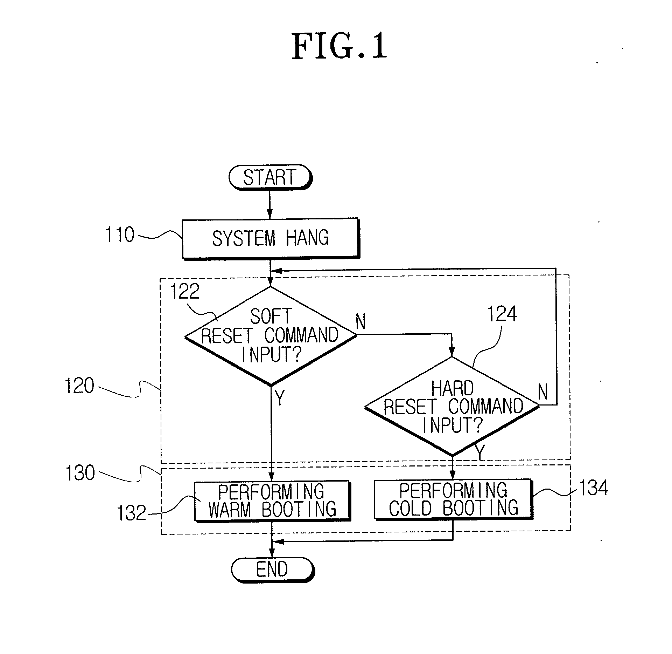

Figure 1 is a flow chart of the soft reset and the hard reset of a conventional embedded device.

Referring to Figure 1, at step 110, an embedded device has entered an endless loop, an application programs has conflicted with other software or there might have been an operating system kernel exception, causing the system to hang or lock up. In the hang state 120, when the user selects either hard reset or soft reset, in stage 130, a reset operation corresponding to the selected reset command is performed. Accordingly, at step 122, when a soft reset interrupt is generated, a kernel interrupt handler of the OS performs the soft reset routine at step 132. At step 124, if the hard reset command is input by the user, e.g. by pressing a protected key using a pin, the embedded device performs hardware initialization at step 134, without using the OS kernel interrupt handler.

With such a conventional embedded device, the user usually tries the soft reset first and, if there is no response by the device, the user tries the hard reset. It is for the purpose of maintaining the data recorded in the RAM that the user first tries the soft reset. However, when there is no response by the device, the user has no choice but to try the hard reset because it means typically that the kernel is in a panic state. However, many users, especially those who are familiar with desktop computers, may be unaware that all the data recorded in the RAM is deleted when hard resetting an embedded device.

Accordingly, when the user operates the hard reset on purpose or by mistake, in the conventional embedded device, all the data recorded in the RAM is deleted. The user of a portable device, such as a PDA, would be significantly inconvenienced because the hard reset initializes the system, deleting all configuration data set up by the user, application programs, and back-up data.

A device according to the present invention is characterised in that the processor is responsive to operation of the user input means to display a confirmation dialog including means to enable a user to confirm a request for a hard reset.

The user input means comprises may comprises separate hardware means for requesting soft and hard resets.

Preferably, the processor is responsive to operation of the user input means to display a reset mode selection dialog providing a user with the options of a hard reset and a soft reset. More preferably, said confirmation dialog is displayed in response to selection of a hard reset using the reset mode selection dialog.

The confirmation dialog box may provide the user with the options of confirming a request for a hard reset or substituting a soft reset.

An embodiment of the present invention will now be described, by way of example, with reference to Figures 2 to 6 of the accompanying drawings, in which:
Figure 1 is a flowchart illustrating the resetting options of a conventional embedded device;
Figure 2 is a block diagram of an embedded device according to the present invention;
Figures 3 to 5 illustrate user interface screens displayed in response to a hard reset command being input into the embedded device of Figure 2; and
Figure 6 is a flowchart illustrating resetting of the embedded device of Figure 2.

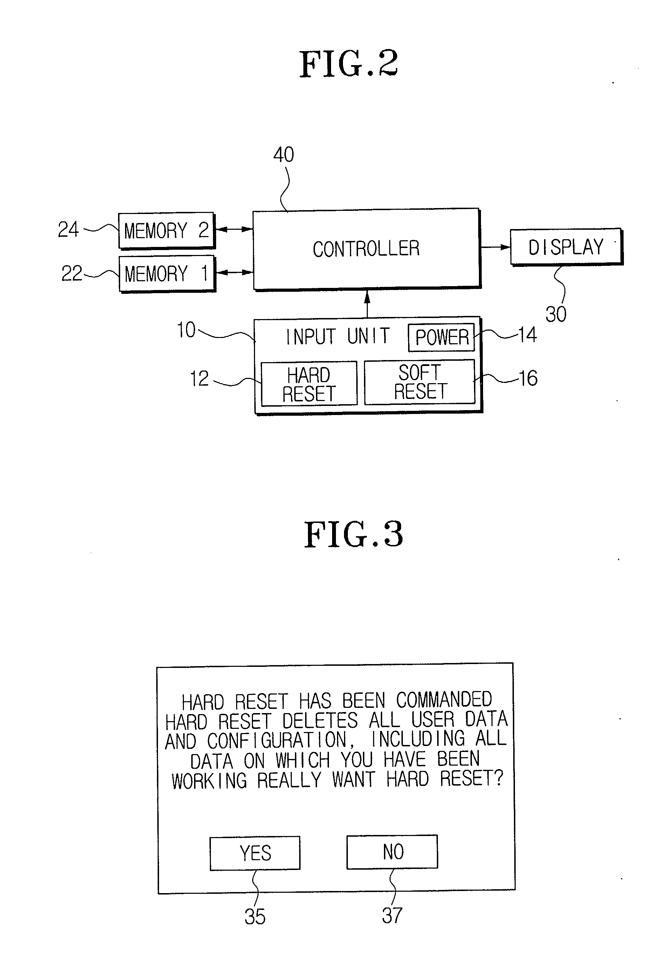

Referring to Figure 2, a PDA (Personal Digital Assistant), according to an embodiment of the present invention, has an input unit 10, first and second memories 22, 24, a display 30 and a controller 40.

The input unit 10 comprises command input keys 12, 14 to allow a user to input either a hard reset command or a soft reset command, various command input keys, such as a power on/off key 16, and various other user input means (not shown). For example, the input means could include one or more of a keyboard, a stylus, touch screen, a microphone and other known input techniques. The input unit 10 can be two single operation input keys (not shown) or the combination of menu item and means to select the menu item (not shown), instead of the command input keys 12, 14. In the case of single command input keys, there can be a separate soft reset key to trigger a soft reset directly without a reset command menu being displayed on the display 30.

The first memory 22 stores an operating system (OS), comprising a kernel, related to operation of the system (i.e., the embedded device). Some devices use the storage space of the first memory 22 as an OS installation area and an application program storing area.

The second memory 24 stores environment set-up data, application programs and the user's working data. The second memory 24 has an operation area to store program data related to the operation of the system temporarily and to store working data of the user temporarily and a storage area for backing up of the working data by the user.

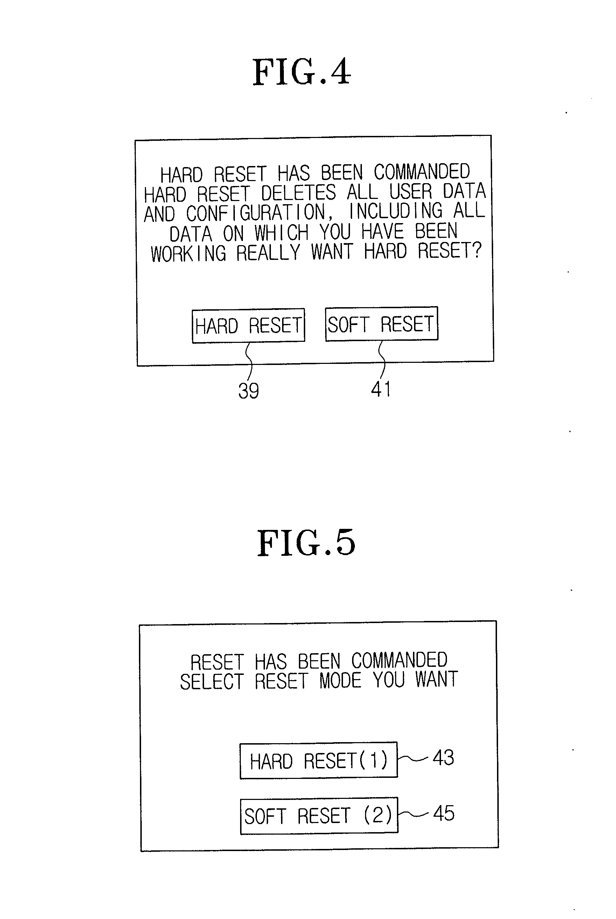

The display 30 displays a visual user interface screen under the control of the controller 40. The controller 40 controls the embedded device to display a confirmation message alerting a user about selection of a hard reset in response to a hard reset command input through the input unit 10. The confirmation message can be a dialog displayed on the screen of the display 30 as shown in Figure 3. Alternatively, the controller 40 can display a warning massage and a confirmation message on the display 30 as shown in Figure 4, in response to the hard reset command input through the input unit 10 by the user. In particular, in Figure 4, a confirmation dialog is displayed, providing a hard reset mode button for confirmation of the hard reset command and a soft reset mode button for cancellation of the hard reset command and performance of a soft reset instead.

Alternatively, as shown in Figure 5, the controller 40 can display a reset selection dialog with hard reset and soft reset buttons in response to input of a reset request. In particular, in Figure 5, an input reset request would be a generic reset request from the user, not indicating whether hard of soft reset is required. The controller 40 operates according to the button 43, 45 clicked by the user.

Referring to Figure 3, when a hard reset command is input through the input unit 10, the controller 40 displays a dialog on the display 30 containing a warning message, alerting the user to data loss and YES and NO buttons 35, 37 to enable the user to confirm or cancel the hard reset. If the selection of the hard reset command from the user is confirmed by clicking on the YES button 35, the controller 40 performs a cold boot. If the NO button 37 is clicked, the controller 40 returns the screen to its status before input of the hard reset command.

Referring to Figure 4, when a hard reset command is input through the input unit 10, the controller 40 displays a dialog containing a warning message and mode selection buttons 39, 41, so that the user can confirm the hard reset request or opt for a soft reset instead.

Referring to Figure 5, when a generic reset command is input through a reset key, which does not indicate whether the reset is to be hard or soft, formed in the input unit 10, the controller 40 displays a dialog with hard and soft reset buttons 43, 45 so that the user can select hard or soft reset. The controller 40 performs the reset operation corresponding to the button 43, 45 clicked by the user. If the user clicks the hard reset button 45, one of the dialogs shown in Figures 3 or 4 may be displayed so that the user can confirm or cancel the hard reset request or substitute a soft reset.

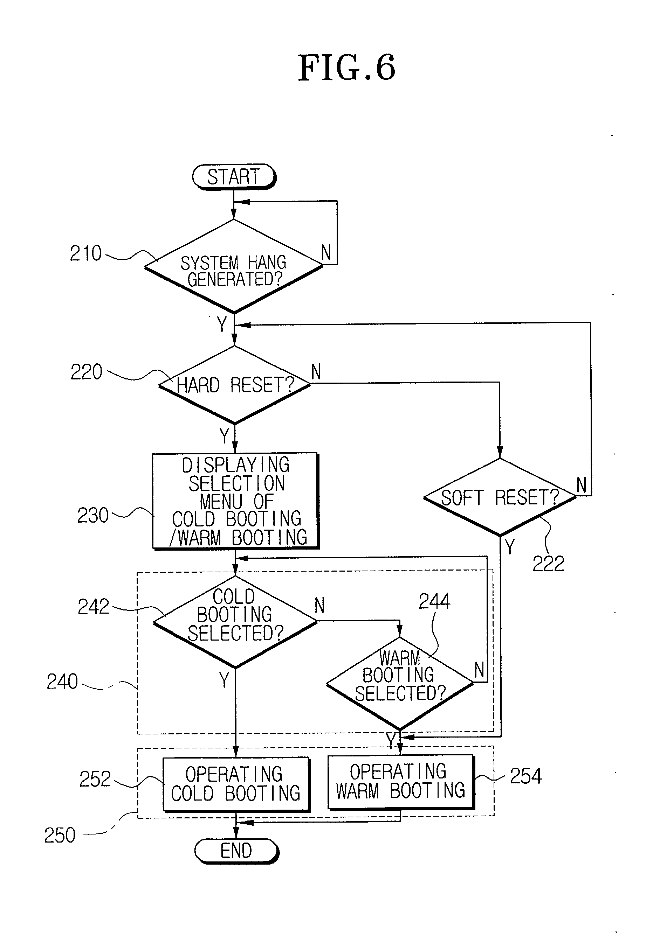

Referring to Figure 6, if the embedded device can enters an endless loop, an application program conflicts with another program or there is an OS kernel exception, state 210, the system enters into a hang state. In the hang state, if a hard reset command is input via the input unit 10 at step 220, a reset mode selection dialog is displayed to allow a user to select one from cold booting (hard reset mode) and a warm booting (soft reset mode) at operation 230. In stage 240, one of the modes displayed on the mode selection dialog is selected by the user and the corresponding boot type is performed in stage 250. In other words, at operation 242, if cold boot is selected, a cold boot is performed at operation 252 and if a warm boot is selected at step 244, the warm boot is performed at operation 254.

At step 222, if input of a soft reset command through a soft reset key is detected, the embedded device immediately performs a warm boot without displaying a reset mode selection dialog on the display 30.

According to the present invention's method of controlling reset of an embedded device, because data loss in response to a hard reset is alerted to a user, a user can confirm selection of the hard reset so that when the user again selects and/or selects the hard reset to be performed, the user can be prepared/is notified regarding possible data loss, and thus, the user is enabled to preserve the data more safely (i.e., preclude inadvertent data loss). Further, with an embedded device and an initializing method of the same according to the present invention, data loss following selection of a hard reset is alerted to a user if the user selects the hard reset by mistake, thereby preventing inadvertent data loss by the user and/or allowing someone who is not familiar with the device can keep the stored data safely. Further, even when a user selects a hard reset because of a hang-state of the system during operation of the system, a warm booting can still be performed by another selection of the user (i.e., the user has another opportunity to select a warm booting). Accordingly, the present invention prevents inadvertent data loss by providing to a user a data loss warning and displaying a reset mode selection menu, in response to a hard reset command to allow a user to confirm and/or select either cold booting or warm booting after being notified of data loss. The processes of the present invention embodied in the controller 40 and the input unit 10 are implemented in computer hardware and/or software.

## Claims

1. An embedded device including a display (30), user input means (10) including means for requesting a reset (12, 16), a processor (40) and a memory (24), the contents of the memory (24) being erased by a hard reset of the device, **characterised in that** the processor (40) is responsive to operation of the user input means (10) to display a confirmation dialog including means (35;39) to enable a user to confirm a request for a hard reset.

2. A device according to claim 1, wherein the user input means comprises hardware means (16) for requesting a soft reset and separate hardware means (12) for requesting a hard reset.

3. A device according to claim 1, wherein the processor (40) is responsive to operation of the user input means (10) to display a reset mode selection dialog providing a user with the options of a hard reset and a soft reset.

4. A device according to claim 3, wherein said confirmation dialog is displayed in response to selection of a hard reset using the reset mode selection dialog.

5. A device according to any preceding claim, wherein the confirmation dialog box provides the user with the options of confirming a request for a hard reset or substituting a soft reset.

6. An embedded device including a data storage unit having stored therein a configuration setting data and user data, said embedded device having a hard reset mode that when selected initializes said embedded device by deleting said user data from said data storage unit, said embedded device having a soft reset mode that when selected initializes said embedded device while preserving at least a portion of said user data in said data storage unit, said embedded device comprising:
a controller receiving a hard reset selection signal, and providing, in response to said hard reset selection signal, a confirmation message alerting a user of said embedded device of selection of said hard reset mode.

7. The embedded device according to claim 1, further comprising:
a display,
wherein said confirmation message is a visual user interface screen displayed on said display.

8. The embedded device according to claim 7, wherein:
said visual user interface screen comprises a menu screen including at least a first selectable option and a second selectable option, said controller activating said hard reset mode upon user selection of said first selectable option, and said controller disregarding said hard reset selection signal upon user selection of said second selectable option.

9. The embedded device according to claim 7, wherein said controller provides a selection menu having said hard reset mode and said soft reset mode through said visual user interface screen in response to a reset signal received without indication of selection of said hard reset mode or said soft reset mode, said controller performing the user selected reset mode.

10. A method of initializing an embedded device that includes a data storage unit having stored therein a configuration setting data and a user data, said embedded device having a hard reset mode that when selected initializes said embedded device by deleting said user data from said data storage unit, said embedded device having a soft reset mode that when selected initializes said embedded device while preserving at least a portion of said user data in said data storage unit, said method comprising:
receiving a hard reset selection signal indicating selection of the hard reset mode by a user of said embedded device; and
providing, in response to said hard reset selection signal, a confirmation message alerting said user of selection of said hard reset mode the provision of the confirmation message comprises displaying a visual user interface screen.

11. The method in accordance with claim 10, wherein the displaying of the visual user interface comprises providing a menu screen including at least a first selectable option to activate said hard reset mode and a second selectable option to cancel said hard reset mode from being activated.

12. The method in accordance with claim 10, the providing of the confirmation message comprises providing a selection menu having said hard reset mode and said soft reset mode through said visual user interface screen in response to a reset signal, and performing one of the reset modes selected by the user.

13. A device with an embedded storage space to backup user data, comprising:
a programmed computer processor notifying a user of data loss and displaying a reset mode selection menu, in response to a hard reset command, to allow the user to confirm and/or select either the hard reset or a soft reset preserving the data, after the data loss notification.

14. A method of hard resetting a device having an embedded storage space to backup user data, comprising:
warning the user of deletion of all user data before hard resetting the device and deleting the user data in response to a hard reset command by the user.

15. The method of claim 10, wherein the warning comprises:
allowing the user to cancel and/or select a soft reset preserving the user data.
